# EUROPEAN PATENT SPECIFICATION

(11) **EP 0 736 427 B1**
(45) Date of publication and mention of the grant of the patent: **11.03.1998**
(21) Application number: 95830493.3
(22) Date of filing: 27.11.1995
(51) Int. Cl.: B60T 3/00

(54) **Chock for industrial vehicles**
Keil für Nutzfahrzeuge
Cale pour véhicules utilitaires

(30) Priority: 06.04.1995 IT TO950086 U
(43) Date of publication of application: 09.10.1996
(73) Proprietor: IVECO FIAT S.p.A., 10156 Torino (IT)
(72) Inventor: Bozza, Antonio, I-10153 Torino (IT)
(74) Representative: Buzzi, Franco

(56) References cited:
- CH-A- 407 877
- FR-A- 2 110 471
- US-A- 4 186 823

## Description

The present invention is related to a chock for industrial vehicles.

Traditionally these chocks, intended to be used as stop blocks to be applied to the front and/or to the rear of the wheels of a parking vehicle so as to prevent the risk of undesired or accidental displacements thereof, comprise a substantially wedge-shaped body having a bearing base onto the ground, a front wall for backing a vehicle wheel, a rear wall and two side walls.

Chocks of the above-referenced type are generally known in the art, for instance from FR-A-2.110.471, CH-A-407.877 and US-A-4,186,823.

Owing to manufacturing economy and structural simplicity and lightness reasons, these chocks are nowadays produced by moulding of plastic material. To the aim of ensuring in use efficient gripping of the chock to the ground under thrust conditions applied thereagainst by a vehicle tire, it is necessary to incorporate within the body base a metal insert projecting outwardly in proximity of the rear wall thereof. This metal insert is traditionally constituted by a strap or the like slanting towards the rear wall of the chock body, adapted to act as a prop to the ground, such as shown in CH-A-407.877.

According to this construction, the metal insert is subjected in use to relevant strains which are transmitted as concentrated stresses to the chock body, with the risk of breakage thereof in correspondence of the fixing area of the reinforcement insert, thus jeopardizing functionality of the chock.

To the aim of overcoming the above drawback, the present invention is directed to a chock for industrial vehicles of the type set forth in the above, the primary feature of which resides in that said metal insert is constituted by a profiled element having at least two wings forming an angle relative to each other and both bearing against the chock body.

By virtue of this idea of solution, the strains applied in use by the vehicle wheel to the bearing base of the chock, i.e. to the projecting portion of the metal insert, are more efficiently shared and distributed over the chock body, thus safeguarding the structural integrity and functional efficiency thereof.

According to a preferred embodiment of the invention, said profiled insert has a generally T-shaped cross section with a head portion arranged substantially parallel to the rear wall of the chock body and defining an inner wing fitted within a corresponding inner seat of the body and an outer wing projecting from the base of said body, and a leg portion defining a third wing substantially perpendicular to said head portion and engaged with the body base.

Alternatively, the profiled insert may have a differently shaped cross section, for instance H-shaped with two adjacent wings projecting from the body base, or different arrangements provided that same are such as to perform equal functional efficiency deriving from a better distribution of the stresses applied in use onto the chock.

According to another feature of the invention, the chock body is formed by spaced-apart longitudinal partitions interconnecting said base and said rear wall, and by transverse partitions interconnecting said base and said lateral walls and crossing at right angles said longitudinal partitions; the transverse partitions extending beyond the base so as to define corresponding arrays of anti-slippage teeth whose height is increasing towards the body rear wall. In this case the teeth of the array which is closest to the body rear wall are conveniently formed with respective notches for engagement therein of the longitudinal edge of said leg portion of the profiled metal insert.

According to a further feature of the invention, the chock comprises a second metal insert projecting from the body base and fitted within a seat of one of said transverse partitions remote from said body rear wall, parallel to the head portion of said profiled insert.

This feature ensures, in use, a still firmer anchoring of the chock base to the ground.

According to a further aspect of the invention, the areas of mutual crossing between said longitudinal partitions and said transverse partitions are thickened, and at least part of said transverse partitions are formed with intermediate thickenings in the areas thereof comprised between said crossing areas with the longitudinal partitions.

Due to this feature the chock is provided with an improved structural resistance together with lightness and constructive simplicity characteristics.

Following another aspect of the invention, at least part of said transverse partitions have, on the side corresponding to the body front wall, respective arcuate edges the concavity of which is facing outwardly.

This arrangement, which may be restricted to the transverse partitions which are closest to the rear wall of the body or may be extended to the whole of the transverse partitions, enables in use an improved backing of the vehicle tire, as well as a more efficient pressure distribution over the front wall of the chock body.

The invention will now be disclosed in detail with reference to the accompanying drawings, purely provided by way of non-limiting example, in which:

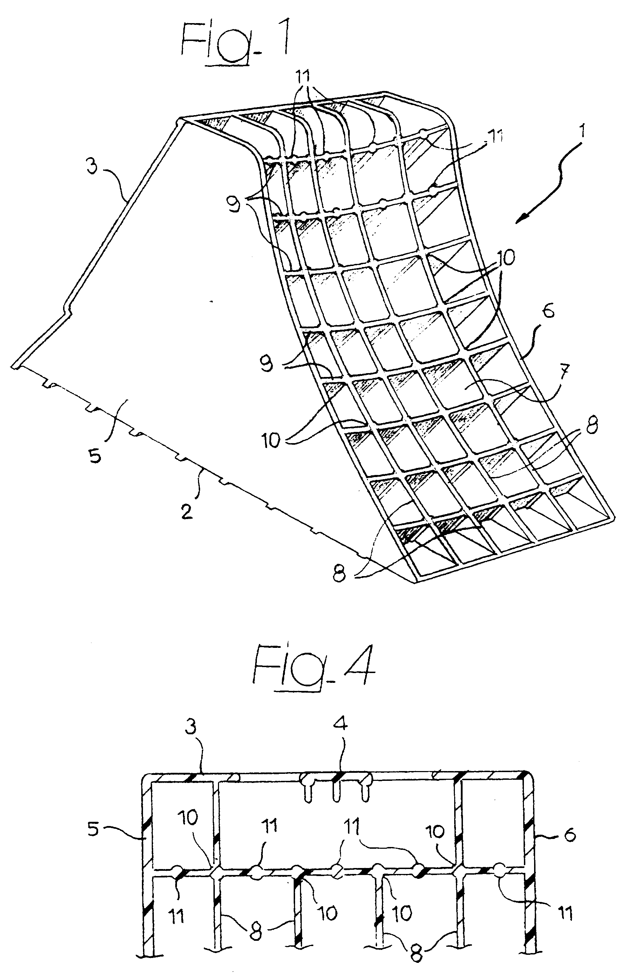

figure 1 is a diagrammatic perspective view of a chock for industrial vehicles according to the invention,
figure 2 is an enlarged bottom plan view according to arrow II of figure 1,
figure 3 is a longitudinally sectioned view along line III-III of figure 2, and
figure 4 is a cross section along line IV-IV of figure 3.

Referring to the drawings, reference numeral 1 generally designates a chock according to the invention for industrial vehicles, which is formed by a substantially wedge-shaped body of moulded plastic material.

The chock body 1 comprises a base wall 2, which in use is intended to bear on the ground, a rear wall 3 forming an oblique angle with the base 2 and provided with an integrally-formed grasp handle 4, two lateral walls 5, 6 and a front wall 7 for the backing of a vehicle wheel.

The inner structure of the chock body 1 is hollow, being defined by a series of equally spaced-apart longitudinal partitions 8, having a generally triangular shape, which are arranged parallelly to the lateral walls 5, 6, interconnect the base 2 with the rear wall 3, and have a decreasing height towards the end of the body 1 opposed to this rear wall 3, and by a series of equally spaced-apart transverse partitions 9, which are oriented substantially parallelly to the rear wall 3 and interconnect the lateral walls 5, 6 with the base 2. The longitudinal partitions 8 and the transverse partitions 9 mutually cross at right angles, in correspondence of junctions 10 having a thickened section, whereby the inner structure of the chock body 1 is provided with a quadrangular cross-section cell-like configuration.

According to one aspect of the invention, to the aim of strengthening the above-disclosed inner structure of the chock body 1, at least the upper transverse partitions, i.e. those placed nearest to the rear wall 3, are formed with intermediate thickenings 11 made by moulding in the areas comprised between the junctions 10, and between the outermost junctions 10 and the lateral walls 5, 6 (figure 4). These intermediate thickenings 11 may also be conveniently provided for all of the transverse partitions 9.

According to another feature of the invention, at least the upper transverse partitions 9, i.e. again those located near to the rear wall 3, have their respective outer edges, defining the front wall 7 of the chock body 1, arcuated with the concavity thereof facing outwardly. This configuration may be conveniently extended to the outer edges of all of the transverse partitions 9, and correspondingly also to those of the longitudinal partitions 8, so that the entire configuration of the front wall 7 is concave thus ensuring, in use, an enhanced distribution of the force applied by the tire of a vehicle bearing against the chock 1.

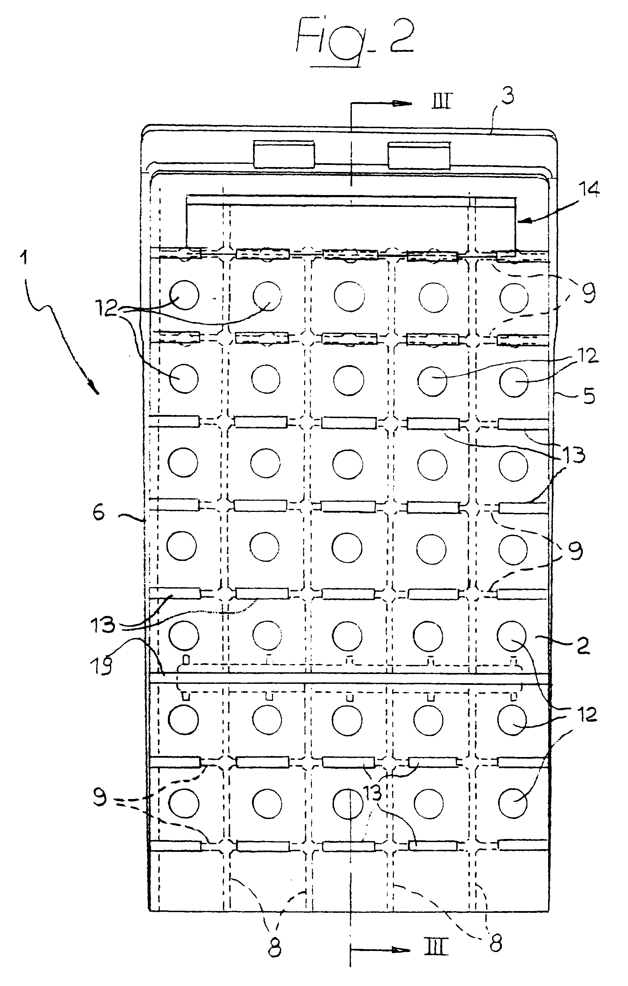

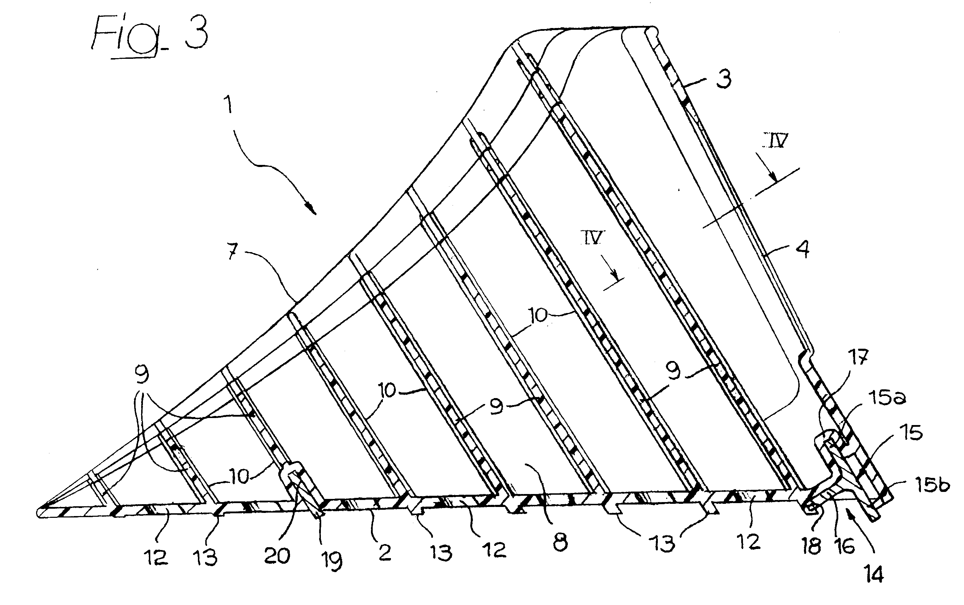

As depicted in detail in figures 2 and 3, the base of the chock body 1 is formed with a plurality of circular holes 12 arranged in correspondence of the cells defined between the longitudinal partitions 8 and the transverse partitions 9, and is further provided with projections 13, acting as anti-slippage teeth protruding outwardly in correspondence of the areas of the transverse partitions 9 comprised between the junctions 10, as extensions of these transverse partitions 9, and the height of which is increasing towards the rear wall 3.

Between the array of anti-slipping teeth 13 corresponding to the transverse partition 9 which is closest to the rear wall 13, and the corner comprised between this rear wall 3 and the base 2, a metal insert 14 is housed within the chock body 1, the function of which is to ensure in use gripping of the chock 1 to the ground.

According to the invention, the metal insert 14 is constituted by a profiled element having at least two wings forming an angle relative to each other and both reacting against the chock body 1. In the case of the shown embodiment, the profiled insert 14 has a substantially T-shaped cross section with a head portion 15 arranged substantially parallel to the rear wall 3 of the body 1, and a leg portion 16 perpendicular to the head portion 15. The two wings of the profiled insert 14 reacting against the chock body 1 are defined on one side by the half 15a of the head portion 15 which is facing towards the inside of the body 1, and on the other side by the leg portion 16. The half of the head portion 15 facing outwardly of the body 1, indicated as 15b, projects beyond the base 2 and the anti-slippage teeth 13 thereof, such as shown in figure 3.

Retaining of the wing 15a relative to the body 1 is performed by means of engagement thereof within an inner seat 17 formed in the body 1 near to the rear wall 3. Engagement of the wing 16 is on the other hand carried out in correspondence of rear notches 18 formed along the array of the anti-slippage teeth 13 corresponding to the transverse partition 9 which is closest to the rear wall 3.

Reference numeral 19 designates a second metal insert projecting from the base 2 and formed by a strap oriented parallelly to the head portion 15 of the profiled insert 14, which is fitted within a corresponding seat 20 formed at the bottom of one of the transverse partitions 9 remote from the rear wall 3.

Naturally the details of construction and the embodiments may be widely varied with respect to what has been disclosed and illustrated, without thereby departing from the scope of the present invention such as defined in the appended claims. Thus, for instance, the configuration of the profiled insert 14 may be different from the T-shape shown in the drawings, and may for instance be formed with a H-shaped or different cross section, provided that it has at least two bearing surfaces relative to the chock body 1, so as to afford a more efficient and safe distribution of the stresses applied in use to the chock by a vehicle wheel.

## Claims

1. Chock for industrial vehicles, comprising a substantially wedge-shaped body (1) of moulded plastic material having a bearing base (2) onto the ground, a front wall (7) intended for backing a vehicle wheel, a rear wall (3) and two lateral walls (5, 6), and wherein said base (2) incorporates a metal insert (14) projecting in proximity of the rear wall (3) of the body (1), characterised in that said metal insert is constituted by a profiled element (14) having at least two wings (15a, 16) forming an angle relative to each other and both bearing against the chock body (1).

2. Chock according to claim 1, characterised in that said profiled insert (14) has a substantially T-shaped cross section with a head portion (15) arranged substantially parallelly to the rear wall (3) of the chock body (1) and defining an inner wing (15a) fitted within a corresponding inner seat (17) of the body and an outer wing (15b) projecting from the base (2) of said body (1), and a leg portion defining a third wing (16) which is substantially perpendicular to said head portion (15) and engaged with the base (2) of the body (1).

3. Chock according to claim 2, characterised in that said body (1) is formed by spaced-apart longitudinal partitions (8) interconnecting said base (2) and said rear wall (3), and by transverse partitions (9) interconnecting said base (2) and said lateral walls (5, 6) and crossing at right angles said longitudinal partitions (8), said transverse partitions (9) extending beyond the base (2) so as to define corresponding arrays of anti-slippage teeth (13) whose height is increasing towards the rear wall (3) of the body, and in that the anti-slippage teeth (13) of the array which is closest to the rear wall (3) of the body (1) are formed with respective notches (18) for engagement therein of the edge of said leg portion (16) of said profiled metal insert (14).

4. Chock according to claim 3, characterised in that it comprises a second metal insert (19) projecting from the base (2) and fitted within a seat (20) formed in one of said transverse partitions (9) remote from said rear wall (3) of the body (1), parallelly to said head portion (15) of said profiled insert (14).

5. Chock according to claim 3, characterised in that the mutual crossing areas (10) between said longitudinal partitions (8) and said transverse partitions (9) are thickened, and in that said transverse partitions (9) are at least in part formed with intermediate thickenings (11) in the areas thereof comprised between said crossing areas (10) with the longitudinal partitions (8).

6. Chock according to claim 3, characterised in that said transverse partitions (9) have at least in part, in correspondence of the front wall (7) of the body (1), respective arcuate edges whose concavity is facing outwardly.

## Patentansprüche

1. Bremsklotz für Nutzfahrzeuge, der einen im wesentlichen keilförmigen Körper (1) aus geformtem Kunststoffmaterial mit einer Unterseite (2), die auf dem Boden aufliegt, einer Vorderwand (7), die dazu dient, ein Fahrzeugrad abzustützen, einer Rückwand (3) und zwei Seitenwänden (5, 6) umfaßt, wobei die Unterseite (2) einen Metalleinsatz (14) enthält, der in der Nähe der Rückwand (3) des Körpers (1) vorsteht, **dadurch gekennzeichnet,** daß der Metalleinsatz durch ein Profilelement (14) gebildet wird, das wenigstens zwei Schenkel (15a, 16) hat, die einen Winkel in Bezug zueinander bilden und beide an dem Bremsklotzkörper (1) anliegen.

2. Bremsklotz nach Anspruch 1, **dadurch gekennzeichnet,** daß der Profileinsatz (14) einen im wesentlichen T-förmigen Querschnitt hat, wobei ein Kopfabschnitt (15) im wesentlichen parallel zur Rückwand (3) des Bremsklotzkörpers (1) angeordnet ist und einen inneren Schenkel (15a) aufweist, der in eine entsprechende innere Aufnahme (17) des Körpers eingepaßt ist, sowie einen äußeren Schenkel (15b), der von der Unterseite (2) des Körpers (1) vorsteht, und einen Beinabschnitt, der einen dritten Schenkel (16) im wesentlichen senkrecht zu dem Kopfabschnitt (15) bildet und mit der Unterseite (2) des Körpers (1) in Kontakt ist.

3. Bremsklotz nach Anspruch 2, **dadurch gekennzeichnet,** daß der Körper (1) durch beabstandete Längstrennwände (8) gebildet wird, die die Unterseite (2) und die Rückwand (3) miteinander verbinden, sowie durch Quertrennwände (9), die die Unterseite (2) und die Seitenwände (5,6) miteinander verbinden und die Längstrennwände (8) in rechten Winkeln schneiden, wobei sich die Quertrennwände (9) über die Unterseite (2) hinaus erstrecken und so entsprechende Anordnungen von rutschverhindernden Zähnen (13) bilden, deren Höhe zur Rückwand (3) des Körpers hin zunimmt, und dadurch, daß die rutschverhindernden Zähne (13) der Anordnung, die sich am nächsten an der Rückwand (3) des Körpers (1) befinden, mit entsprechenden Einkerbungen (18) versehen sind, in die die Kante des Beinabschnitts (16) des Profilmetalleinsatzes (14) eingreift.

4. Bremsklotz nach Anspruch 3, **dadurch gekennzeichnet,** daß er einen zweiten Metalleinsatz (19) umfaßt, der von der Unterseite (2) vorsteht und in eine Aufnahme (20), die in einer der Quertrennwände (9), die von der Rückwand (3) des Körpers (1) entfernt ist, parallel zu dem Kopfabschnitt (15) des Profileinsatzes (14) eingepaßt ist.

5. Bremsklotz nach Anspruch 3, **dadurch gekennzeichnet,** daß die Bereiche (10), in denen die Längstrennwände (8) und die Quertrennwände (9) einander schneiden, verdickt sind, und daß die Quertrennwände (9) zumindest teilweise mit Zwischenverriegelungen (11) in den Bereichen versehen sind, die zwischen den Bereichen (10) der Überschneidung mit den Längstrennwänden (8) eingeschlossen sind.

6. Bremsklotz nach Anspruch 3, **dadurch gekennzeichnet,** daß die Quertrennwände (9) wenigstens teilweise an der Vorderwand (7) des Körpers (1) entsprechende bogenförmige Ränder haben, deren Konkavität nach außen gerichtet ist.

## Revendications

1. Cale pour des véhicules industriels, comportant un corps sensiblement en forme de coin (1) en matière plastique moulée ayant une base d'appui (2) sur le sol, une paroi avant (7) destinée à soutenir une roue de véhicule, une paroi arrière (3) et deux parois latérales (5, 6), et dans laquelle ladite base (2) incorpore un insert métallique (14) qui dépasse à proximité de la paroi arrière (3) du corps, caractérisée en ce que ledit insert métallique est constitué par un élément profilé (14) ayant au moins deux ailes (15a, 16) formant un angle l'une par rapport à l'autre et portant toutes deux contre le corps de cale (1).

2. Cale selon la revendication 1, caractérisée en ce que ledit insert profilé (14) présente une section sensiblement en forme de T avec une partie de tête (15) prévue sensiblement parallèlement à la paroi arrière (3) du corps de cale (1) et définissant une aile interne (15a) montée dans un siège intérieur correspondant (17) du corps et une aile externe (15b) dépassant de la base (2) dudit corps (1), et une partie de patte définissant une troisième aile (16) qui est sensiblement perpendiculaire à ladite partie de tête (15) et engagée avec la base (2) du corps (1).

3. Cale selon la revendication 2, caractérisée en ce que ledit corps (1) est formé par des cloisons longitudinales espacées (8) reliant ladite base (2) et ladite paroi arrière (3), et par des cloisons transversales (9) reliant ladite base (2) et lesdites parois latérales (5, 6) et coupant à angle droit lesdites cloisons longitudinales (8), lesdites cloisons transversales (9) s'étendant au-delà de la base (2) de façon à définir des rangées correspondantes de dents antidérapantes (13) dont la hauteur augmente en direction de la paroi arrière (3) du corps, et en ce que les dents antidérapantes (13) de la rangée qui est la plus proche de la paroi arrière (3) du corps sont formées avec des encoches respectives (18) pour l'engagement du bord de ladite partie de patte (16) dudit insert métallique profilé (14).

4. Cale selon la revendication 3 caractérisée en ce qu'elle comporte un deuxième insert métallique (19) qui dépasse de la base (2) et monté dans un siège (20) formé dans l'une desdites cloisons transversales (9) éloignée de ladite paroi arrière (3) du corps (1), parallèlement à ladite partie de tête (15) dudit insert profilé (14).

5. Cale selon la revendication 3, caractérisée en ce que les zones de croisement mutuel (10) entre lesdites cloisons longitudinales (8) et lesdites cloisons transversales (9) sont épaissies, et en ce que lesdites cloisons transversales (9) sont au moins en partie formées avec des épaississements intermédiaires (11) dans les zones de celles-ci comprises entre lesdites zones de croisement (10) avec les cloisons longitudinales (8).

6. Cale selon la revendication 3, caractérisée en ce que lesdites cloisons transversales (9) possèdent, au moins en partie, en correspondance avec la paroi avant (7) du corps (1), des bords courbes respectifs dont la concavité est dirigée vers l'extérieur.
